# EUROPÄISCHE PATENTSCHRIFT

(11) **EP 1 463 891 B1**
(45) Veröffentlichungstag und Bekanntmachung des Hinweises auf die Patenterteilung: **14.06.2006**
(21) Anmeldenummer: 03704197.7
(22) Anmeldetag: 09.01.2003
(51) Int. Cl.: F16C 11/06

(54) **KUGELGELENK**
BALL-AND-SOCKET JOINT
JOINT A ROTULE

(30) Priorität: 11.01.2002 DE 10201022
(43) Veröffentlichungstag der Anmeldung: 06.10.2004
(73) Patentinhaber: ZF Lemförder Metallwaren AG, 49448 Lemförde (DE)
(72) Erfinder: BRÖKER, Klaus, 49163 Bohmte (DE); NOE, Helmut, 48477 Hörstel (DE)
(86) Internationale Anmeldenummer: PCT/DE2003/000048
(87) Internationale Veröffentlichungsnummer: WO 2003/058080

(56) Entgegenhaltungen:
- DE-A- 3 940 679
- US-A- 3 108 830
- US-A- 5 601 305

## Beschreibung

Die Erfindung betrifft ein Kugelgelenk mit einem Gelenkzapfen, welcher mit einem kugelförmigen Gelenkbereich dreh- und kippbar in einer Lagerschale aufgenommen ist, die wiederum in der Ausnehmung eines Gelenkgehäuses angeordnet ist, wobei ein Verschlussring die Lagerschale im Gelenkgehäuse in axialer Längsrichtung des Gelenkzapfens durch mindestens eine Anlagefläche festlegt.

Kugelgelenke der eingangs geschilderten Art sind in mannigfaltiger Ausgestaltung aus dem Stand der Technik bekannt (siehe z.b. US-A-5 601 305), wobei sie insbesondere im Fahrwerks- und Lenkungsbereich von Personenkraftwagen und Nutzfahrzeugen eingesetzt werden. Ein maßgebliches Kriterium für die Güte der eingesetzten Kugelgelenke ist hierbei deren Lebensdauer, welche auch unter erschwerten Beanspruchungsbedingungen ausreichend groß bemessen sein sollte. Eine wesentliche Voraussetzung für die Bereitstellung einer ausreichenden Lebensdauer sind hierbei möglichst geringe Toleranzen der Kugelgelenkbauteile, wobei insbesondere der kugelförmige Gelenkbereich des Gelenkzapfens, die diesen aufnehmende Lagerschale sowie deren Festlegung durch den Verschlussring im Gelenkgehäuse in Bezug auf geringe Maßtoleranzen von Bedeutung sind. Die verwendeten Verschlussringe werden oftmals durch einen Drehvorgang hergestellt und sind in Hinblick auf radiale Verschiebungen in Bezug auf die Längsachse des Gelenkzapfens im Moment der Montage besonders empfindlich. Die Montage erfolgt üblicherweise durch einen Verrollvorgang, wodurch eine einseitige Anlage der Kugelschale am Verschlussring entstehen kann, was zu frühzeitigem Gelenkverschleiß und daraus resultierend zu einem zu großen Spiel im Gelenk führt.

Aufgabe der vorliegenden Erfindung ist es daher, ein Kugelgelenk der gattungsgemäßen Art derart weiterzubilden, dass die auf die Lebensdauer einwirkenden hohen Anforderungen an maßliche Toleranzen bei der Herstellung des Kugelgelenkes herabgesetzt werden können.

Diese Aufgabe wird in Zusammenschau mit den technischen Merkmalen des Gattungsbegriffes durch die technische Lehre der kennzeichnenden Teile der nebengeordneten unabhängigen Ansprüche gelöst.

Ein erster wesentlicher Erfindungsgedanke ist hierbei, dass zwischen den korrespondierenden Anlageflächen an Lagerschale und Verschlussring ein Zwischenelement aus elastischem Material angeordnet ist. Die Zwischenschaltung des elastischen Elementes erlaubt in gewissen Grenzen eine Schrägstellung der Anlageflächen für die Festlegung der Lagerschale, so dass sowohl im neuen Zustand als auch nach einer in Folge fortgeschrittener Einsatzzeit erfolgten Verschleißsituation die Funktion des Kugelgelenkes im Wesentlichen erhalten bleibt, da eine Verkantung zwischen Lagerschale und Verschlussring vermieden wird. Erhöhte Toleranzen infolge fortgeschrittenem Verschleiß lassen sich durch eine definierte Vorspannung des Zwischenelementes vermeiden.

Darüber hinaus lassen sich auch in gewissen Grenzen axiale Toleranzen ausgleichen. Erreicht wird durch eine erfindungsgemäße Ausbildung eine Herabsetzung der Herstellkosten für die einzelnen Bauteile des Kugelgelenkes und somit einen Gesamtkosten vorteil, ohne dass negative Einflüsse auf die angestrebte hohe Lebensdauer befürchtet werden müssen.

Entsprechend einer vorteilhaften Weiterbildung des Erfindungsgegenstandes kann das Zwischenelement hierbei als Elastomerschicht ausgebildet sein. Diese Elastomerschicht lässt sich zweckmäßigerweise an den Verschlussring anvulkanisieren oder ankleben. Durch diese Maßnahme wird das Handling von verschiedenen Einzelteilen beim Zusammenbau des Kugelgelenkes vermieden und darüber hinaus die Lagerhaltung reduziert.

Die maßlichen Toleranzen des Verschlussringes lassen sich darüber hinaus zusätzlich reduzieren, indem zwischen dem Verschlussring und der Innenwandung der die Lagerschale aufnehmenden Ausnehmung, in welche der Verschlussring üblicherweise durch einen Absatz festgelegt ist, ein weiteres Zwischenelement aus elastischem Material angeordnet ist. Dieses weitere Zwischenelement kann entsprechend einer vorteilhaften Weiterbildung ebenfalls als Elastomerschicht ausgebildet sein, wobei das Handling wiederum dadurch erleichtert wird, dass das Zwischenelement oder die Elastomerschicht an den Verschlussring anvulkanisiert oder angeklebt ist.

Um eine weitere Ursache erhöhten Verschleißes und daraus resultierender verringerter Lebensdauer zu beseitigen, kann entsprechend einer vorteilhaften Weiterbildung des Erfindungsgegenstandes das erste Zwischenelement Rastmittel zur rotatorischen Festlegung der Lagerschale am Zwischenelement in Bezug auf die Gelenkzapfenlängsachse aufweisen. Auf diese Weise wird eine Verdrehung um die Gelenkzapfenlängsachse bzw. eine Relativbewegung zwischen den korrespondierenden Bauelementen verhindert, welche zwangsläufig in Folge der erhöhten Reibung zur vorzeitigem Verschleiß führen würde.

Alternativ zu der bislang geschilderten technischen Lehre besteht eine weitere Lösung der Aufgabe im Wesentlichen darin, dass ein Einsatzelement, welches zwischen Außenfläche der Lagerschale und Innenfläche der diese aufnehmenden Ausnehmung im Bodenbereich der Ausnehmung angeordnet ist, an zumindest einem Teil der Außenfläche des Einsatzelementes ein Zwischenelement aus elastischem Material aufweist. Dabei kann das Zwischenelement zwischen dem Einsatzelement und der inneren Oberfläche der Ausnehmung angeordnet sein oder zwischen der Lagerschale und dem Einsatzelement vorgesehen werden.

Die Eigenschaften des elastischen Zwischenelementes wirken hierbei ebenfalls als Toleranzausgleich und können darüber hinaus in gewissen Grenzen durch Verschleiß bedingte Vergrößerungen des Spiels zwischen den korrespondierenden Bauteilen ausgleichen. Zusätzlich kann das Zwischenelement dämpfend wirken, wobei hierbei insbesondere in axialer Richtung auf das Kugelgelenk wirkende Stoßkräfte durch das elastische Zwischenelement aufgenommen werden können. Entsprechend einer vorteilhaften Weiterbildung kann das Zwischenelement als Elastomerschicht ausgebildet sein, welches sowohl im Bodenbereich als auch im seitlichen Bereich zwischen dem Einsatzelement und der dieses aufnehmenden Ausnehmung angeordnet ist. Für das Zwischenelement aus elastischem Material als auch deren Weiterbildung als Elastomerschicht bietet sich zum leichteren Handling die Anvulkanisierung oder Anklebung an das Einsatzelement an.

Im Folgenden werden die beiden erfindungsgemäßen Lösungen anhand mehrer Ausführungsbeispiele, welche in den beigefügten Zeichnungen dargestellt sind, näher erläutert.

Es zeigt hierbei:
- Figur 1: eine Schnittdarstellung durch ein erstes Ausführungsbeispiel für die erste Lösungsvariante der Erfindung,
- Figur 2: ein weiteres Lösungsbeispiel der ersten Lösungsvariante ,
- Figur 3: eine Schnittdarstellung durch ein Kugelgelenk mit den Merkmalen der zweiten Lösungsvariante des Gegenstandes der Erfindung,
- Figur 4: eine vergrößerte Teilschnittdarstellung durch den Bodenbereich eines weiteren Ausgestaltungsbeispiels eines Kugelgelenkes mit den Merkmalen der zweiten Lösungsvariante des Gegenstandes der Erfindung und
- Figur 5: eine vergrößerte Teilschnittdarstellung entsprechend eines weiteren Ausgestaltungsbeispiels eines Kugelgelenkes mit den Merkmalen der zweiten Lösungsvariante des Gegenstandes der Erfindung

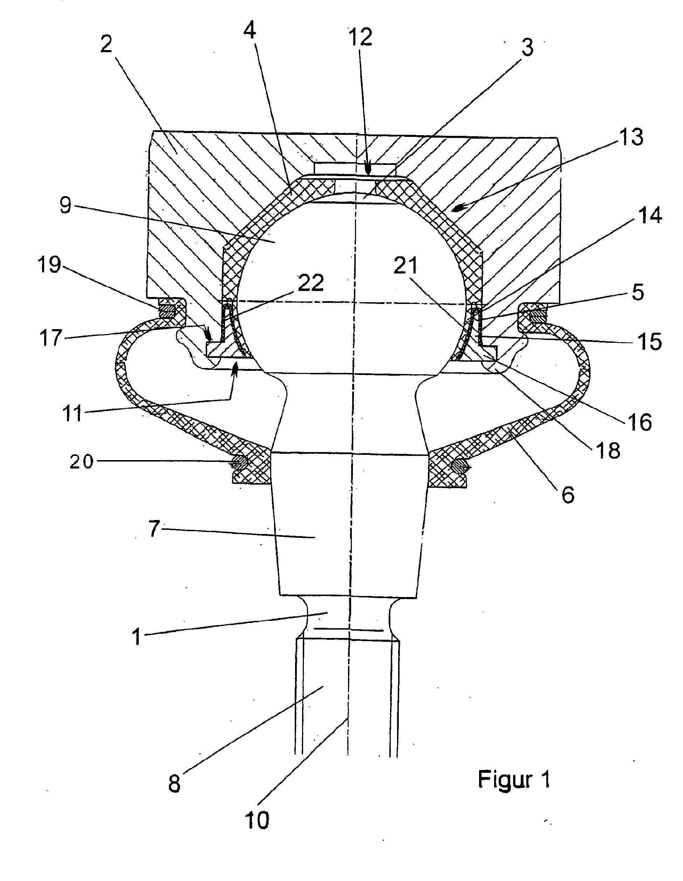

In der Figur 1 ist ein Kugelgelenk dargestellt, welches im Wesentlichen aus einem Gelenkzapfen 1, einem Gelenkgehäuse 2, einer innerhalb einer Ausnehmung 3 des Gelenkgehäuses 2 angeordneten ein- oder mehrteiligen Lagerschale 4, einem Verschlussring 5 sowie einem aus elastischem Material bestehenden Dichtungsbalg 6 besteht. Ein derartiges Kugelgelenk kann beispielsweise im Kraftfahrzeugbereich und hier im Fahrwerk oder an Lenkungsteilen von Personenkraftwagen und Nutzfahrzeugen eingesetzt sein. Es dient dazu, eine kontrollierte Dreh- und Kippbewegung zwischen zwei Bauteilen zu ermöglichen, wobei der Gelenkzapfen mit seinem freien, aus dem Gelenkgehäuse herausragenden Ende, welches einen Konus 7 und ein sich daran anschließendes, mit einem Gewinde versehenes Befestigungsende 8 aufweist, an einem Kraftfahrzeugbauteil festgelegt wird. Das dazu korrespondierende bewegliche andere Bauteil wird mit hier nicht näher dargestellten Befestigungsmitteln am Gelenkgehäuse 2 festgelegt. An dem dem Befestigungsende 8 gegenüberliegenden Ende besitzt der Gelenkzapfen 1 einen kugelförmigen Gelenkbereich 9, der innerhalb des Gelenkgehäuses 2 angeordnet ist und dort in der hohlkugelförmigen Innenkontur der Lagerschale 4 so festgelegt ist, dass sowohl eine Drehbewegung um die Gelenkzapfenlängsachse 10 als auch eine Kippbewegung relativ zu dieser Gelenkzapfenlängsachse 10 möglich ist. Die Ausnehmung 3, welche die Lagerschale 4 aufnimmt, besitzt einen äußeren mit einer Öffnung 11 versehenen zylindrischen Bohrungsteil sowie einen sich zum Boden 12 der Ausnehmung 3 erstreckenden kegelstumpfförmigen Bohrungsbereich 13. Bei der Montage des Kugelgelenkes wird zunächst die Lagerschale 4 in die Ausnehmung 3 des Gelenkgehäuses 2 und danach der Gelenkbereich 9 des Gelenkzapfens 1 in die Lagerschale 4 eingesetzt, wobei letzteres mittels eines Einpressvorganges erfolgen kann. Die zur Öffnung 11 gerichteten dünnen, elastisch verformbaren Bereiche 14 der Lagerschale 4 werden hierbei nach außen gepresst und fallen nach dem Einführen des Gelenkzapfens 1 wieder in ihre ursprüngliche Position zurück, da die Lagerschale aus elastischem Kunststoffmaterial besteht. Eine andere Variante der Gelenkzapfenmontage kann darin bestehen, dass die dünnen Bereiche 14 der Lagerschale 4 im nicht zusammengebauten Zustand des Kugelgelenkes eine zylinderförmige Gestalt aufweisen, so dass der Gelenkzapfen ohne Verbiegen der Bereiche 14 in die Lagerschale eingesetzt werden kann.

In einem weiteren Arbeitsgang wird anschließend die Öffnung 11 des Gelenkgehäuses 2 mit dern Verschlussring 5 verschlossen. Der Verschlussring 5 besteht im Wesentlichen aus zwei zylinderförmigen Bereichen 15 und 16, wobei der Bereich 15 als in axialer Richtung zum Inneren des Gelenkgehäuses 2 hin vorspringender Ring ausgebildet ist. Die innere, der Lagerschale 4 zugewandte Oberfläche des Bereiches 15 ist hierbei sphärisch ausgebildet und bildet zusammen mit der am vorderen, zum Inneren des Gelenkgehäuses gerichteten Stimbereich des Verschlussringes 5 eine Anlagefläche für die Lagerschale 4 und sichert deren Festlegung in axialer Längsrichtung der Gelenkzapfenlängsachse 10.

Sollten die dünnen Bereiche 14 der Lagerschale 4 im nicht zusammengebauten Zustand des Kugelgelenkes eine zylinderförmige Gestalt aufweisen, so sorgt beim Zusammenbau des Kugelgelenkes der Bereich 15 des Verschlussringes 5 für eine Anlage der Bereiche 14 der Lagerschale 4 am Gelenkbereich 9 des Gelenkzapfens 1, wobei zur leichteren Verformung die Lagerschale 4 mit Axiallängsschlitzen versehen sein kann.

Der sich außen an dem Bereich 15 des Verschlussringes 5 anschließende Bereich 16 besitzt einen größeren Außendurchmesser als der Bereich 15 und liegt auf einem Absatz 17 des Gelenkgehäuses 2 auf. Im Rahmen der Montage des Kugelgelenkes wird der Verschlussring 5 einem Verrollungsvorgang unterzogen, während dessen der Gelenkgehäuserand abschnittsweise umgeformt, vorzugsweise jedoch umgebördelt wird. Mittels dieses Umformvorganges, der eine Bördelkante 18 an der Axialaußenseite des Verschlussringes 5 erzeugt, kann der Verschlussring festgelegt werden. In einem abschließenden Herstellschritt wird die Öffnung 11 des Gelenkgehäuses 2 mittels eines zwischen dem Gelenkgehäuse 2 und dem Konus 7 des Gelenkzapfens 1 angeordneten Dichtungsbalg 6 geschlossen, welcher über Spannringe 19 und 20 in seiner Position gehalten wird.

Bei dem in der Figur 1 dargestellten Ausführungsbeispiel ist der Verschlussring 5 sowohl an seiner inneren, der Lagerschale 4 zugewandten Oberfläche mit einem elastischen Zwischenelement 21 versehen, welches in diesem Ausführungsbeispiel als Elastomerschicht ausgebildet ist, die auch um das stirnseitige Ende des Verschlussringes herumreicht. Die Elastomerschicht ist in einem vorgeschalteten separaten Arbeitsgang an den Verschlussring anvulkanisiert worden, wobei eine alternative Befestigungsform auch eine Verklebung des Zwischenelementes 21 am Verschlussring 5 vorsehen kann.

Durch diese Maßnahme ist die Lagerschale 4 einerseits in Axiallängsrichtung fixiert, andererseits kann die Elastomerschicht als Zwischenelement 21 Maßungenauigkeiten zwischen den korrespondierenden Anlageflächen der Flächenpaarung von Lagerschale 4 und Verschlussring 5 ausgleichen. Dieser Ausgleich von Maßungenauigkeiten kann auch dadurch verbessert werden, dass ein weiteres Zwischenelement 22 an der zylinderförmig ausgebildeten Außenfläche des Verschlussringes 5 im Bereich von dessen Aufnahme im zylinderförmigen Bereich der Ausnehmung 3 angeordnet wird. Dieses weitere Zwischenelement 22 ist ebenfalls aus elastischem Material gefertigt und vorzugsweise ebenfalls als an den Verschlussring 5 anvulkanisierte oder angeklebte Elastomerschicht ausgebildet. Mittels dieses weiteren Zwischenelementes 22 können auch Durchmesserunterschiede zwischen der Ausnehmung 3 im Gelenkgehäuse 2 und dem Verschlussring 5 ausgeglichen werden.

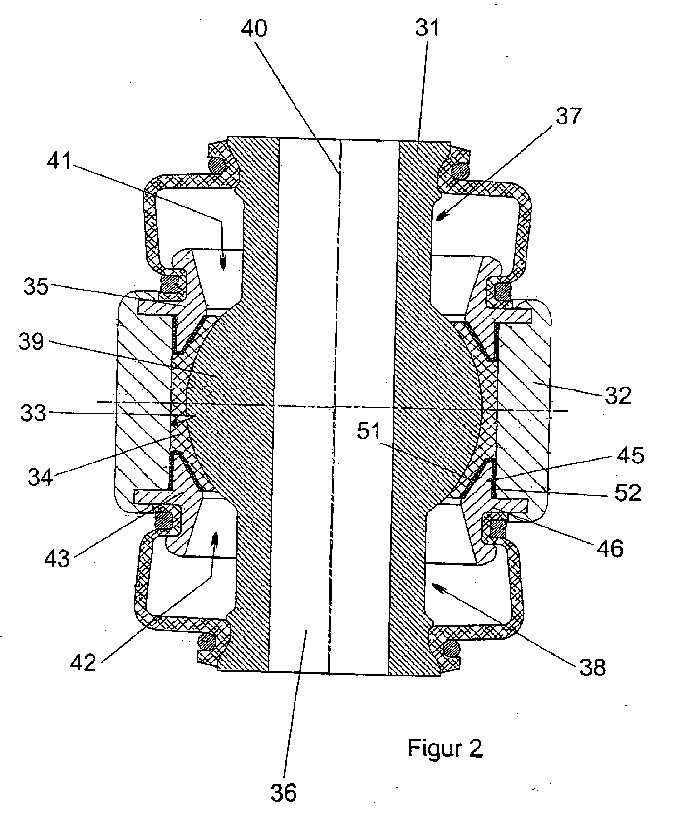

In der Figur 2 ist ein Kugelgelenk dargestellt, welches spezieller auch als Kugelhülsengelenk bezeichnet wird. Diese spezielle Form des Kugelgelenkes weist ebenfalls ein Gelenkgehäuse 32, in dessen im Wesentlichen zylinderförmigen Ausnehmung 33 eine Lagerschale 34 aufgenommen ist. Die Lagerschale 34 wiederum ist mit einer kugelsegmentartigen Innenfläche versehen, welche einen Gelenkzapfen 31 aufnimmt.

Der Gelenkzapfen 31 besitzt im Gegensatz zu der Darstellung der Figur 1 eine abgewandelte Form mit einer mittigen zylinderförmigen Bohrung 36, einem zentral angeordneten Gelenkbereich 39 und beidseitig daran anschließend, sich nach außen erstreckende, wiederum im Wesentlichen zylinderförmige Bereiche 37 und 38. Die Bereiche 37 und 38 ragen beidseitig aus dem Gelenkgehäuse 32 heraus, auf Grund dessen dieses mit entsprechenden Öffnungen 41 und 42 versehen ist. Aufgabe eines derartigen Kugelgelenkes ist es wiederum, zwei benachbarten Bauteilen eine zueinander kontrollierte Bewegung zu ermöglichen. Ein Bauteil ist hierbei innerhalb der Bohrung 36 aufgenommen, das zu diesem Bauteil dreh- und kippbar bewegliche andere Bauteil ist an der Außenseite des Gelenkgehäuses 2 in einer hier nicht näher dargestellten Aufnahme befestigt.

Die Lagerschale 34 ist in diesem Ausfiihrungsbeispiel mittels zweier Verschlussringe 35 und 43 in axialer Richtung der Gelenkzapfenlängsachse 40 festgelegt. Diese Verschlussringe 35 und 43 weisen zur Festlegung der Lagerschale 34 im Wesentlichen die gleiche Formgestaltung auf wie dies bereits bei der Besprechung der Figur 1 ausführlich beschrieben worden ist. Demgemäss besitzen die Verschlussringe 35 und 43 einen zum Inneren des Gelenkgehäuses 32 gerichteten Bereich 45, der eine zylinderförmige Außenkontur besitzt und der an seiner Innenseite der in diesem Ausführungsbeispiel im Bereich der Flächenpaarung kegelförmig ausgebildeten Außenkontur der Lagerschale 34 angepasst ist. Die der Lagerschale zugewandte Oberfläche des Bereiches 45 bildet eine Anlagefläche zur axialen Festlegung der Lagerschale 34. An den Bereich 45 schließt sich nach außen ein Bereich 46 an, welcher im Wesentlichen ringförmig ausgebildet ist und einen größeren Außendurchmesser aufweist als der Bereich 45. Die Aussenkanten des Gelenkgehäuses 32 werden nach dem Einbau der Lagerschale 34 sowie der Verschlussringe 35 und 43 ebenfalls mittels eines Verrollungsvorganges umgelegt, so dass der Verschlussring fest mit dem Gelenkgehäuse 32 verbunden ist. Analog zu der bereits anhand der Figur 1 erfolgten Beschreibung der Erfindung sind die beiden Verschlussringe 36 und 43 an der äußeren Oberfläche des Bereiches 45 innen und außen mit einem elastischen Zwischenelement 51, 52 in Form einer Elastomerschicht versehen. Die Elastomerschicht kann mit der Oberfläche der Verschlussringe 35 und 43 verklebt oder an diese anvulkanisiert werden. Die Zwischenelemente 51 und 52 bilden analog zum Ausführungsbeispiel der Figur 1 auf Grund ihrer elastischen Eigenschaften die Möglichkeit des Toleranzausgleiches zwischen den Verschlussringen 35 und 43, dem Gelenkgehäuse 32 und der Lagerschale 34, so dass an die Maßhaltigkeit dieser Bauelemente des Kugelgelenkes bei Vorhandensein der Elastomerschichten sehr viel geringere Anforderungen zu stellen sind. Dies führt zum einen zu einer Herabsetzung der Herstellkosten durch eine geringere Ausschussquote und darüber hinaus zu einer Verbesserung der Lebensdauer, da die aufgebrachten Elastomerschichten ebenfalls in gewisser Größenordnung einen Toleranzausgleich in Folge von Abnutzungserscheinungen des Kugelgelenkes ausgleichen können.

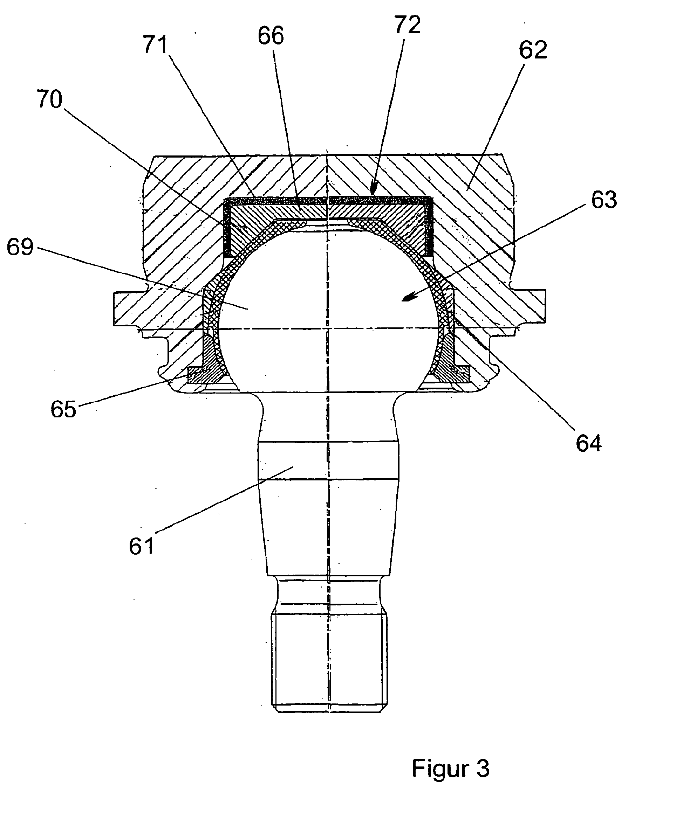

Das Ausführungsbeispiel der Figur 3 entspricht vom konstruktiven Prinzip in wesentlichen Elementen demjenigen der Figur 1. Auch bei diesem Ausführungsbeispiel ist in einem Gelenkgehäuse mit der Bezeichnung 62 ein Gelenkzapfen 61 dreh- und kippbar aufgenommen. Die Aufnahme erfolgt dadurch, dass ein kugelförmig ausgebildeter Gelenkbereich 69 in einer mit einer hohlkugelförmigen korrespondieren Lagerschale 64 aufgenommen ist. Die Lagerschale 64 wiederum ist in einer Ausnehmung 63 des Gelenkgehäuses 62 aufgenommen, wobei sich im Gegensatz zur Darstellung der Figur 1 im Bodenbereich 72 ein Einsatzelement 66 befindet. Das Einsatzelement 66 ist vorzugsweise aus Stahl gefertigt und besitzt in der Figur 3 eine zylinderförmige, der Innenkontur der Ausnehmung 63 angepasste Außenkontur, welche selbstverständlich auch beispielsweise kegelstumpfförmig sein kann, sowie eine kegelstumpfförmige Innenkontur, in die die Lagerschale 64 eingreift. Die Ausnehmung 63 im Gelenkgehäuse 62 besitzt wiederum eine Öffnung, die mit einem Verschlussring 65 geschlossen ist. Zum Ausgleich von Maßtoleranzen in axialer und radialer Richtung ist das Einsatzelement 66 an seiner äußeren dem Bodenbereich 72 des Gelenkgehäuses 62 zugewandten Begrenzungsfläche mit mindestens einem aus elastischem Material bestehenden Zwischenelement 71 versehen. Zum Ausgleich rein axialer Maßtoleranzen sowie zur Aufnahme axialer Stoßkräfte auf das freie Ende des Gelenkzapfens 61 kann das Zwischenelement 71 nur in dem Boden der Ausnehmung 63 zugewandten Stirnbereich des Einsatzelementes angeordnet sein oder zum zusätzlichen Ausgleich radialer Maßtoleranzen an seiner zylinderförmigen Außenkontur als weiteres Zwischenelement 70. Die Ausgestaltung der aus elastischem Material bestehenden Zwischenelemente 70 und 71 besteht bei einem Kugelgelenk, wie es in der Figur 3 gezeigt ist, wiederum in der Ausbildung einer Elastomerschicht, die an die äußere Oberfläche des Einsatzelementes 66 anvulkanisiert oder angeklebt ist.

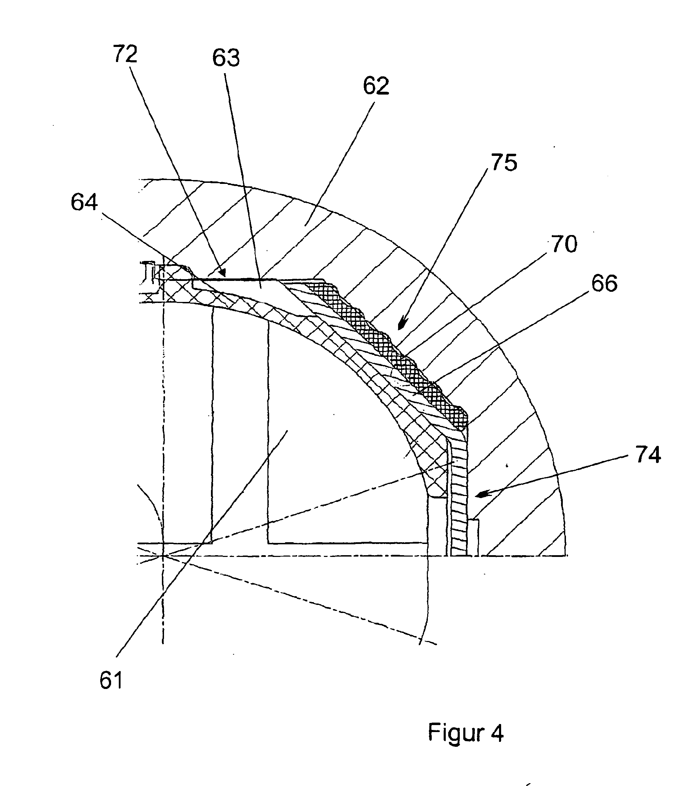

In der Figur 4 ist ausschnittsweise der Bodenbereich eine Kugelgelenkes dargestellt, welches im Wesentlichen der bereits im Rahmen der Beschreibung zu Figur 3 dargestellten weiteren Lösungsvariante entspricht. Auch hier befindet sich zwischen der Lagerschale 64 und der innen Oberfläche der Ausnehmung 63 des Gelenkgehäuses 62 ein Einsatzelement 66, welches im Gegensatz zur Darstellung der Figur 3 als gekantetes Blechteil ausgeführt ist. Die Ausnehmung 63 ist im Bodenbereich kegelstumpfförmig ausgeführt und besitzt damit sowohl einen senkrechten, also parallel zur Gelenkzapfenlängsachse 10 des unausgelenkten Gelenkzapfens 1 verlaufenden Bereich 74 als auch einen sich zum Bodenbereich 72 des Gelenkgehäusès 62 hin verjüngenden Bereich 75. Das Einsatzelement 66 ist dieser Kontur der Ausnehmung 63 entsprechend angepasst, so dass sich eine Anlagefläche des Einsatzelement 66 sowohl am Bereich 74 ergibt als auch eine parallel zum Bereich 75 gestaltete kegelförmig ausgebildete Abkantung. Im Bereich dieser kegelförmigen Abkantung befindet sich analog zur Ausbildung der Figur 3 ein Zwischenelement 70 aus elastischem Material, welches im dargestellten Ausführungsbeispiel als Elastomerschicht ausgebildet ist. Diese Elastomerschicht ist in der Lage, sowohl einen Toleranzausgleich zwischen den benachbarten Bauteilen, d.h. der Innenwandung der Ausnehmung 63 und der Außenkontur des kegelförmigen Bereiches 75 des Einsatzelementes 66 auszugleichen und gleichzeitig Stoßbelastungen in axialer Richtung, die auf den Gelenkzapfen 61 einwirken und von dort auf die Lagerschale 64 und über das Zwischenelement 70 auf das Gelenkgehäuse 62 einwirken, aufzunehmen. Selbstverständlich kann die das Zwischenelement 70 bildende Elastomerschicht am Einsatzelement 66 auch angeklebt sein.

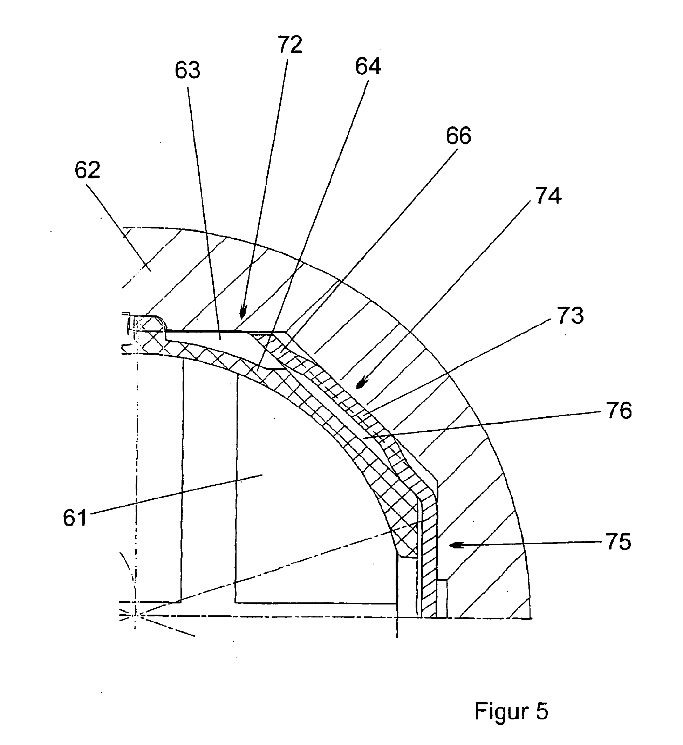

Eine der Figur 4 prinzipiell entsprechende Ausgestaltungsvariante ist auch in der Figur 5 dargestellt. Die Innenkontur der Ausnehmung 63 des Gelenkgehäuses 62 entspricht hierbei derjenigen des Kugelgelenkes entsprechend der Figur 4.

Der Unterschied des Ausführungsbeispieles in Figur 5 zu den bisher beschriebenen Varianten besteht darin, dass hierbei das Einsatzelement 66 selbst mit federnden Bereichen 73 versehen ist. Die Federwirkung des Einsatzelementes 66 wird hierbei sowohl durch die Materialwahl als auch durch die besondere Formgestaltung bestimmt. Das Einsatzelement 66 ist entsprechend dieser Ausgestaltungsvariante aus Federstahl gefertigt und weist in seinem kegelförmigen Bereich mehrere über den Umfang verteilte federnde Bereiche 73, die vorzugsweise als Sicken gestaltet sind, auf. Diese Sicken sind Vertiefungen, die in die blechförmige Kontur des Einsatzelementes 66 eingeprägt sind und sich in Richtung der Innenoberfläche der Ausnehmung 63 des Gelenkgehäuses 62 erstrecken. Es ergibt sich somit jeweils nur an den zwischen den Sicken vorhandenen Erhebungen eine Kontaktfläche mit der inneren Oberfläche der Ausnehrnung 63. Durch die Elastizitätseigenschaften des verwendeten Federstahles in Verbindung mit der Ausbildung der Sicken können in axialer Richtung auf den Gelenkzapfen 61 wirkende Kräfte, die von diesem über die Lagerschale 64 in das Gelenkgehäuse 62 eingeleitet werden, in bestimmten Größenordnungen dadurch aufgenommen werden, dass sich der zwischen Lagerschale 64 und Einsatzelement 66 gebildete Zwischenraum 76 zurückbildet, so dass im Extremfall die am Einsatzelement 66 gebildete Sickenkontur vollkommen verschwindet. Gleichzeitig können durch die Elastizität der Sicken in Verbindung mit dem Material des Einsatzelementes 66 in gewissen Grenzen auf Grund von Verschleiß entstehende Toleranzvergrößerungen zwischen Lagerschale 64 und Ausnehmung 63 ausgeglichen werden.

Die federnden Bereiche 73 des Einsatzelementes 66 lassen sich hierbei selbstverständlich nicht nur als Sicken gestalten, sondern es ist darüber hinaus ebenfalls möglich, im Kegelbereich des Einsatzelementes 66 federnde Laschen anzubringen, die über den eigentlichen Bauraum des Einsatzelementes 66 vorstehen und deren vorstehende Außenkontur eine Anlagefläche zur Innenseite der Ausnehmung 63 in dessen kegelförmigen dem Bodenbereich 72 benachbarten Bereich bildet, was in den Figuren jedoch nicht gezeigt ist.

Alle dargestellten Lösungsvarianten in ihren unterschiedlichen Ausgestaltungen verbessern die Kompensation insbesondere von Axialbelastungen innerhalb des Kugelgelenkes und können darüber hinaus einen Toleranzausgleich für verschleißbedingt vergrößertes Spiel zwischen Lagerschale und Gelenkgehäuse ausgleichen. Die aufgezeigten Maßnahmen führen somit direkt zu einer erhöhten Lebensdauer der erfindungsgemäßen Kugelgelenke gegenüber aus dem Stand der Technik bekannten Ausführungen.

### Bezugszeichenliste

- 1: Gelenkzapfen
- 2: Gelenkgehäuse
- 3: Ausnehmung
- 4: Lagerschale
- 5: Verschlussring
- 6: Dichtungsbalg
- 7: Konus
- 8: Befestigungsende
- 9: Gelenkbereich
- 10: Gelenkzapfenlängsachse
- 11: Öffnung
- 12: Boden
- 13: Kegelstumpfförmiger Bereich
- 14: Bereich
- 15: Bereich
- 16: Bereich
- 17: Absatz
- 18: Verrollungsnase
- 19: Spannring
- 20: Spannring
- 21: Zwischenelement
- 22: Weiteres Zwischenelement

- 31: Gelenkzapfen
- 32: Gelenkgehäuse
- 33: Ausnehmung
- 34: Lagerschale
- 35: Verschlussring
- 36: Bohrung
- 37: Bereich
- 38: Bereich
- 39: Gelenkbereich
- 40: Gelenkzapfenlängsachse
- 41: Öffnung
- 42: Öffnung
- 43: Verschlussring
- 44: Bereich
- 45: Bereich
- 51: Zwischenelement
- 52: Zwischenelement
- 61: Gelenkzapfen
- 62: Gelenkgehäuse
- 63: Ausnehmung
- 64: Lagerschale
- 65: Verschlussring
- 66: Einsatzelement
- 69: Gelenkbereich
- 70: Zwischenelement
- 71: Zwischenelement
- 72: Bodenbereich
- 73: Federnder Bereich
- 74: Bereich
- 75: Bereich
- 76: Zwischenraum

## Patentansprüche

1. Kugelgelenk mit einem Gelenkzapfen (1, 31), welcher mit einem kugelförmigen Gelenkbereich (9, 39) dreh- und kippbar in einer Lagerschale (4, 34) aufgenommen ist, die wiederum in der Ausnehmung (3, 33) eines Gelenkgehäuses (2, 32) angeordnet ist, wobei ein Verschlussring (5, 35, 43) die Lagerschale (4, 34) im Gelenkgehäuse (2, 32) in Axiallängsrichtung des Gelenkzapfens (1, 31) durch mindestens eine Flächenpaarung festlegt,
**dadurch gekennzeichnet, dass** zwischen den korrespondierenden Anlageflächen der Flächenpaarung an Lagerschale (4, 34) und Verschlussring (6, 36, 43) ein Zwischenelement (21,51) aus elastischem Material angeordnet ist.

2. Kugelgelenk nach Anspruch 1, **dadurch gekennzeichnet dass,** das Zwischenelement (20, 50) als Elastomerschicht ausgebildet ist.

3. Kugelgelenk nach Anspruch 1 oder 2, **dadurch gekennzeichnet, dass** das Zwischenelement (21,51) an den Verschlussring (6, 36, 43) anvulkanisiert ist.

4. Kugelgelenk nach Anspruch 1 oder 2, **dadurch gekennzeichnet, dass** das Zwischenelement (21, 51) an den Verschlussring (5, 35, 43) angeklebt ist.

5. Kugelgelenk nach einem der Ansprüche 1 bis 4, **dadurch gekennzeichnet, dass** zwischen dem Verschlussring (5, 35, 43) und der Innenwandung der die Lagerschale (4, 34) aufnehmenden Ausnehmung (3, 33) ein weiteres Zwischenelement (22, 52) aus elastischem Material angeordnet ist.

6. Kugelgelenk nach Anspruch 5, **dadurch gekennzeichnet, dass** das weitere Zwischenelement (22, 52) als Elastomerschicht ausgebildet ist.

7. Kugelgelenk nach Anspruch 5 oder 6, **dadurch gekennzeichnet, dass** das weitere Zwischenelement (22, 52) an den Verschlussring (5, 35, 43) anvulkanisiert ist.

8. Kugelgelenk nach Anspruch 5 oder 6, **dadurch gekennzeichnet, dass** das weitere Zwischenelement (22, 52) an den Verschlussring (5, 35, 43) angeklebt ist.

9. Kugelgelenk nach einem der Ansprüche 1 bis 8, **dadurch gekennzeichnet, dass** zwischen der Lagerschale (4, 34) und dem ersten Zwischenelement (21, 51) Rastmittel zur rotatorischen Festlegung der Lagerschale (4, 34) in Bezug auf die Gelenkzapfenlängsachse (40) vorhanden sind.

10. Kugelgelenk mit einem Gelenkzapfen (61), welcher mit einem kugelförmigen Gelenkbereich (69) dreh- und kippbar in einer Lagerschale (64) aufgenommen ist, die wiederum in der Ausnehmung (63) eines Gelenkgehäuses (62) angeordnet ist, wobei ein Verschlussring (65) die Lagerschale (64) im Gelenkgehäuse (62) in Axiallängsrichtung des Gelenkzapfens (61) durch mindestens eine Flächenpaarung festlegt,
**dadurch gekennzeichnet, dass** zwischen der Außenkontur der Lagerschale (64) und dem Bodenbereich (72) der Ausnehmung (63) ein Einsatzelement (66) angeordnet ist, wobei zwischen dem Einsatzelement (66) und mindestens einer korrespondierenden Oberfläche der Ausnehmung (63) beziehungsweise der Lagerschale (64) mindestens ein Zwischenelement (70, 71) aus elastischem Material angeordnet ist.

11. Kugelgelenk nach Anspruch 10, **dadurch gekennzeichnet, dass** das Zwischenelement (70, 71) als Elastomerschicht ausgebildet ist.

12. Kugelgelenk nach Anspruch 10 oder 11, **dadurch gekennzeichnet, dass** das Zwischenelement (70, 71) an das Einsatzelement (66) anvulkanisiert ist.

13. Kugelgelenk nach Anspruch 10 oder 11, **dadurch gekennzeichnet, dass** das Zwischenelement (70, 71) an das Einsatzelement (66) angeklebt ist.

14. Kugelgelenk nach Anspruch 10, **dadurch gekennzeichnet, dass** das Einsatzelement (66) und das Zwischenelement (70, 71) aus elastischem Material als einstückiges Bauteil aus Federstahl ausgebildet ist, wobei dieses Bauteil mehrere Federbereiche (73) aufweist.

15. Kugelgelenk nach Anspruch 14, **dadurch gekennzeichnet, dass** die Federbereiche (73) als Sicken beziehungsweise vorstehende Erhebungen ausgebildet sind.

16. Kugelgelenk nach Anspruch 14, **dadurch gekennzeichnet, dass** die Federbereiche (73) als zur Innenwandung der Gelenkgehäuseausnehmung vorstehende streifenförmige Bereiche ausgebildet sind.

## Claims

1. Ball joint having a pivot pin (1, 31), which is accommodated by a spherical pivot region (9, 39) in a rotatable and tiltable manner in a bearing shell (4, 34), which in turn is disposed in the recess (3, 33) of a joint housing (2, 32), wherein a closing ring (5, 35, 43) by means of at least one surface pairing fixes the bearing shell (4, 34) in the joint housing (2, 32) in axial longitudinal direction of the pivot pin (1, 31), **characterized in that** between the corresponding abutment faces of the surface pairing on bearing shell (4, 34) and closing ring (6, 36, 43) an intermediate element (21, 51) made of elastic material is disposed.

2. Ball joint according to claim 1, **characterized in that** the intermediate element (20, 50) takes the form of an elastomer layer.

3. Ball joint according to claim 1 or 2, **characterized in that** the intermediate element (21, 51) is vulcanized onto the closing ring (6, 36, 43).

4. Ball joint according to claim 1 or 2, **characterized in that** the intermediate element (21, 51) is glued onto the closing ring (5, 35, 43).

5. Ball joint according to one of claims 1 to 4, **characterized in that** between the closing ring (5, 35, 43) and the inner wall of the recess (3, 33) accommodating the bearing shell (4, 34) a further intermediate element (22, 52) made of elastic material is disposed.

6. Ball joint according to claim 5, **characterized in that** the further intermediate element (22, 52) takes the form of an elastomer layer.

7. Ball joint according to claim 5 or 6, **characterized in that** the further intermediate element (22, 52) is vulcanized onto the closing ring (5, 35, 43).

8. Ball joint according to claim 5 or 6, **characterized in that** the further intermediate element (22, 52) is glued onto the closing ring (5, 35, 43).

9. Ball joint according to one of claims 1 to 8, **characterized in that** between the bearing shell (4, 34) and the first intermediate element (21, 51) detent means are provided for rotationally fixing the bearing shell (4, 34) in relation to the pivot pin longitudinal axis (40).

10. Ball joint having a pivot pin (61), which is accommodated by a spherical pivot region (69) in a rotatable and tiltable manner in a bearing shell (64), which in turn is disposed in the recess (63) of a joint housing (62), wherein a closing ring (65) by means of at least one surface pairing fixes the bearing shell (64) in the joint housing (62) in axial longitudinal direction of the pivot pin (61), **characterized in that** between the external contour of the bearing shell (64) and the base region (72) of the recess (63) an insert element (66) is disposed, wherein between the insert element (66) and at least one corresponding surface of the recess (63) and/or of the bearing shell (64) at least one intermediate element (70, 71) made of elastic material is disposed.

11. Ball joint according to claim 10, **characterized in that** the intermediate element (70, 71) takes the form of an elastomer layer.

12. Ball joint according to claim 10 or 11, **characterized in that** the intermediate element (70, 71) is vulcanized onto the insert element (66).

13. Ball joint according to claim 10 or 11, **characterized in that** the intermediate element (70, 71) is glued onto the insert element (66).

14. Ball joint according to claim 10, **characterized in that** the insert element (66) and the intermediate element (70, 71) made of elastic material take the form of an integral component made of spring steel, wherein said component has a plurality of resilient regions (73).

15. Ball joint according to claim 14, **characterized in that** the resilient regions (73) take the form of beads and/or projecting raised portions.

16. Ball joint according to claim 14, **characterized in that** the resilient regions (73) take the form of strip-shaped regions projecting towards the inner wall of the joint housing recess.

## Revendications

1. Joint à rotule comportant un pivot (I, 31) qui est logé de manière à tourner et à basculer, avec une zone d'articulation (9, 29) sphérique, dans une coquille de coussinet (4, 34), qui à son tour est disposée dans l'évidement (3, 33) d'un carter d'articulation (2, 32), une bague d'obturation (5, 35, 43) immobilisant la coquille de coussinet (4, 34) dans le carter d'articulation (2, 32) dans la direction longitudinale axiale du pivot (I, 31) par au moins un appariement de surface, **caractérisé en ce que**, entre les surfaces d'appui correspondantes de l'appariement de surface il y a, sur la coquille de coussinet (4, 34) et la bague d'obturation (6, 36, 43), un élément intermédiaire (21, 51) en matière élastique.

2. Joint à rotule selon la revendication 1, **caractérisé en ce que** l'élément intermédiaire (20, 50), est sous forme d'une couche élastomère.

3. Joint à rotule selon la revendication 1 ou 2, **caractérisé en ce que** l'élément intermédiaire (21, 51) est vulcanisé sur la bague d'obturation (6, 36, 43).

4. Joint à rotule selon la revendication 1 ou 2, **caractérisé en ce que** l'élément intermédiaire (21, 51) est collé contre la bague d'obturation (5, 34, 43).

5. Joint à rotule selon l'une quelconque des revendications 1 à 4, **caractérisé en ce que**, entre la bague d'obturation (5, 35, 43) et la paroi intérieure de l'évidement (3, 33) logeant la coquille de coussinet (4, 34), il y a un autre élément intermédiaire (22, 52) constitué d'une matière élastique.

6. Joint à rotule selon la revendication 5, **caractérisé en ce que** l'autre élément intermédiaire (22, 52) est sous forme d'une couche élastomère.

7. Joint à rotule selon la revendication 5 ou 6, **caractérisé en ce que** l'autre élément intermédiaire (22, 52) est vulcanisé sur la bague d'obturation (5, 35, 43).

8. Joint à rotule selon la revendication 5 ou 6, **caractérisé en ce que** l'autre élément intermédiaire (22, 52) est collé sur la bague d'obturation (5, 35, 43).

9. Joint à rotule selon l'une quelconque des revendications 1 à 8, **caractérisé en ce que**, entre la coquille de coussinet (4, 34) et le premier élément intermédiaire (21, 51), se trouvent des moyens d'arrêt pour l'immobilisation en rotation de la coquille de coussinet (4, 34) par rapport à l'axe longitudinal du pivot (40).

10. Joint à rotule comportant un pivot (61) qui est logé de manière à tourner à et basculer, avec une zone d'articulation (69) sphérique, dans une coquille de coussinet (64), qui à son tour est disposée dans l'évidement (63) d'un carter d'articulation (62), une bague d'obturation (65) immobilisant la coquille de coussinet (64) dans le carter d'articulation 62) dans la direction longitudinale axiale du pivot (61) par au moins un appariement de surface, **caractérisé en ce que**, entre le contour extérieur de la coquille de coussinet (64) et la zone de fond (72) de l'évidement (63) il y a un insert (66), un élément intermédiaire (70, 71) en matière élastique étant disposé entre l'insert (66) et au moins une surface correspondante de l'évidement (63) respectivement de la coquille de coussinet (64).

11. Joint à rotule selon la revendication 10, **caractérisé en ce que** l'élément intermédiaire (70, 71) est sous forme d'une couche élastomère.

12. Joint à rotule selon la revendication 10 ou 11, **caractérisé en ce que** l'élément intermédiaire (70, 71) est vulcanisé sur l'insert (66).

13. Joint à rotule selon la revendication 10 ou 11, **caractérisé en ce que** l'élément intermédiaire (70, 71) est collé contre l'insert (66).

14. Joint à rotule selon la revendication 10, **caractérisé en ce que** l'insert (66) et l'élément intermédiaire (70, 71) en matière élastique sont sous forme d'un composant d'un seul tenant en acier pour ressort, ce composant présentant plusieurs zones formant ressort (73).

15. Joint à rotule selon la revendication 14, **caractérisé en ce que** les zones formant ressort (73) sont en forme de collets, respectivement d'aspérités en saillie.

16. Joint à rotule selon la revendication 14, **caractérisé en ce que** les zones formant ressort (73) sont configurées comme des zones en forme de bandes en saillie par rapport à la paroi intérieure de l'évidement dans le carter d'articulation.
